# EUROPÄISCHE PATENTSCHRIFT

(11) **EP 1 671 262 B1**
(45) Veröffentlichungstag und Bekanntmachung des Hinweises auf die Patenterteilung: **01.10.2008**
(21) Anmeldenummer: 04764514.8
(22) Anmeldetag: 26.08.2004
(51) Int. Cl.: G06K 9/20

(54) **VERFAHREN UND SYSTEM ZUM ERFASSEN VON DATEN AUS MASCHINELL LESBAREN DOKUMENTEN**
METHOD AND SYSTEM FOR ACQUIRING DATA FROM MACHINE-READABLE DOCUMENTS
PROCEDE ET SYSTEME PERMETTANT DE DETECTER DES DONNEES DANS DES DOCUMENTS LISIBLES PAR MACHINE

(30) Priorität: 30.09.2003 DE 10345526
(43) Veröffentlichungstag der Anmeldung: 21.06.2006
(73) Patentinhaber: Captaris Document Technologies GmbH, 78467 Konstanz (DE)
(72) Erfinder: SCHIEHLEN, Matthias, 78465 Konstanz (DE)
(74) Vertreter: Schaumburg, Thoenes, Thurn, Landskron
(86) Internationale Anmeldenummer: PCT/EP2004/009539
(87) Internationale Veröffentlichungsnummer: WO 2005/043452

(56) Entgegenhaltungen:
- WO-A-98/47098
- US-A- 5 317 646
- US-A- 5 666 549
- US-A- 5 966 473
- US-A- 6 028 970
- US-A1- 2002 141 660
- CASEY R G ET AL: "INTELLIGENT FORMS PROCESSING" IBM SYSTEMS JOURNAL, IBM CORP. ARMONK, NEW YORK, US, Bd. 29, Nr. 3, Januar 1990 (1990-01), Seiten 435-450, XP000265375 ISSN: 0018-8670

## Beschreibung

Die Erfindung betrifft ein Verfahren und ein System zum Erfassen von Daten aus maschinell lesbaren Dokumenten, wobei die Daten einer Datenbank zugeordnet werden, in dem einzelne Daten möglichst automatisch dem Dokument extrahiert werden und in entsprechende Datenbankfelder eingetragen werden, wobei das erfindungsgemäße Verfahren und System das Erfassen von Daten betrifft, falls Daten für ein oder mehrere bestimmte Datenbankfelder eines Dokumentes nicht mit der notwendigen Zuverlässigkeit extrahiert werden konnten.

Verfahren und Systeme zum Erfassen von Daten aus maschinell lesbaren Dokumenten sind bekannt. Üblicherweise weisen die Systeme einen Scanner auf, mit welchem Vorlagen optisch abgetastet werden. Die hierbei erzeugten Dateien sind maschinell lesbare Dokumente und enthalten in der Regel Textelemente. Die Textelemente werden mit Hilfe einer OCR-Einrichtung in codierten Text umgesetzt. Den Dateien werden in der Regel vorbestimmte Formulare bzw. Templates zugeordnet, so dass anhand der Formulare gezielt bestimmte Informationen aus den Text enthaltenden Dateien ermittelt werden können. Diese Informationen werden zum Beispiel in einer Datenbank abgespeichert.

Derartige Verfahren und Systeme werden beispielsweise bei großen Firmen eingesetzt, um Rechnungen zu lesen. Die so extrahierten Daten können automatisch einer betriebswirtschaftlichen Software übermittelt werden.

Ein solches System ist in der US 4,933,979 beschrieben. Dieses System weist einen Scanner zum optischen Abtasten von Formularen auf. Bei diesem System können eine Vielzahl von Formulartypen definiert werden, wobei jeder Formulartyp bzw. Template durch mehrere Parameter, insbesondere geometrisch definierte Bereiche, in welchen Texte oder Bilder enthalten sein sollen, festgelegt ist. Die Formulartypen können auch durch weitere Eigenschaften, wie zum Beispiel der Schrift, die in den Texten enthalten ist (Alphabet, Zahlen, Symbole, Katakana, Kanji, Handschrift) definiert sein. Nach dem Scannen eines Formulars wird mittels einer Formulartypunterscheidungseinrichtung dem gescannten Formular ein Template zugeordnet. Dementsprechend werden die in dem Textfeld enthaltenen Daten mittels einer OCR-Einrichtung gelesen und extrahiert. Falls kein geeignetes Template vorhanden ist, muss eines erstellt werden.

Aus der WO 98/47098 geht ein weiteres System zum automatischen Erfassen von Daten aus maschinell lesbaren Dokumenten hervor. Hierbei werden mittels eines Scanners Formulare optisch abgetastet. Danach wird automatisch eine Linien-Karte des Formulars erstellt. Hierbei werden zum einen alle Linien erfasst als auch grafische Elemente in eine Linienstruktur umgesetzt. Andere Elemente, wie zum Beispiel Textabschnitte, werden ausgefiltert. Alle vertikalen Linien bilden die Grundlage zur Erstellung eines vertikalen Schlüssels und alle horizontalen Linien bilden die Grundlage zur Erstellung eines horizontalen Schlüssels. Danach wird ermittelt, ob bereits ein Template mit einem korrespondierenden vertikalen und horizontalen Schlüssel vorhanden ist. Falls dies der Fall ist, werden die Daten mit einem entsprechenden Template ausgelesen. Ist dies nicht der Fall, so wird anhand des eingescannten Formulars mittels eines Selbstlern-Modus ein Template erstellt und abgespeichert.

In dem Buch Modern Information Retrieval von Baeza-Yates und Ribeiro-Neto, Eddison-Wessley Verlag, ISBN 0-201-39829-X sind die Grundlagen von Datenbanken und zum schnellen Wiederauffinden von in Datenbanken gespeicherten Informationen erläutert. So ist im Kapitel 8.2 ein Verfahren mit invertierten Dateien, das auch als invertierter Index bezeichnet wird, beschrieben. Bei diesem Verfahren wird aus einem zu untersuchenden Text zunächst ein Wörterbuch mit allen im Text enthaltenen Wörtern erstellt. Allen Wörtern des Wörterbuches werden eine oder mehrere Zahlen zugeordnet, die angeben, an welcher Stelle das Wort im Text auftritt. Derartige invertierte Dateien erlauben eine schnellere automatische Analyse eines zu durchsuchenden Textes. Im Kapitel 8.6.1 ist ein String Matching-Verfahren beschrieben, mit welchem zwei Strings verglichen werden und ein zur Ähnlichkeit der Strings indirekt proportionales Kostenmaß berechnet wird. Wenn die beiden Strings identisch sind, ist der Betrag des Kostenmaßes Null. Je stärker sich die Strings unterscheiden, desto größer ist der Betrag des Kostenmaßes. Das Kostenmaß ist somit ein Ausdruck für die Ähnlichkeit der beiden Strings. Dieses und ähnliche Verfahren sind auch unter den Bezeichnungen Approximate String Matching, Levenshtein-Verfahren, Elastic Matching und Viterbi-Algorythmus bekannt. Diese Verfahren gehören zu dem Gebiet der dynamischen Programmierung.

Aus der noch nicht veröffentlichten Patentanmeldung DE 103 42 594.2 geht ein Verfahren und ein System zum Erfassen von Daten aus mehreren maschinell lesbaren Dokumenten hervor, bei dem aus einem zu bearbeitenden Dokument, dem Lesedokument, Daten extrahiert werden, indem sie an Positionen aus dem Lesedokument ausgelesen werden, die durch in einem Vorlagedokument eingetragene Felder bestimmt sind.

Tritt ein Fehler beim Auslesen der Lesedokumente auf, wird das Lesedokument an einem Bildschirm dargestellt und lediglich durch Markieren entsprechender Felder im Lesedokument können die Daten ausgelesen werden. Hierbei werden, falls es erforderlich ist, automatisch weitere Vorlagedokumente anhand der markierten Lesedokumente erstellt bzw. vorhandene Vorlagedokumente entsprechend korrigiert. Dieses System ist derart einfach bedienbar, so dass keine speziellen Computer- oder Softwarekenntnisse notwendig sind.

Aus der US 5,317,646 geht ein Verfahren hervor, das einen Bediener beim Erzeugen von elektronischen Vorlagen für ein Formularerkennungssystem unterstützt. Hierzu wird ein nicht mit Daten versehenes Formular, ein sogenanntes Master-Formular, an einem Bildschirm dargestellt und der Benutzer kann die Datenfelder mit einer Zeigereinrichtung kennzeichnen. Die Koordinaten, die den entsprechenden Bereich begrenzen, werden automatisch erfasst, nachdem ein einziger Punkt innerhalb dieses Bereiches vom Bediener ausgewählt worden ist. Mit diesem Verfahren können schnell und einfach Vorlagen für die automatische Formularerkennung erstellt werden.

In Casey R.G. et al., "Intelligent Forms Processing", IBM Systems Journal vol. 29 (1990) Nr. 3, Seiten 435 bis 450 wird ein Formularerkennungsverfahren beschrieben, bei dem ein eingescanntes Formular mittels Bildverarbeitungstechniken analysiert und mit anderen gespeicherten Vorlageformularen verglichen wird. Falls keine Übereinstimmung mit einem Vorlageformular gefunden wird, muss ein neues Vorlageformular durch Eingabe am Computer erzeugt werden. Beim Erzeugen einer Vorlage wird das gescannte Formular am Bildschirm dargestellt und mit einer Zeigereinrichtung werden die Begrenzungslinien der Eingabefelder markiert.

Aus der US 2002/141660 A1 geht ein zweistufiges Verfahren hervor, bei welchem zunächst Formularvorlagen eingegeben werden können und danach anhand der eingegebenen Formularvorlagen Dokumente automatisch ausgelesen werden können. Einzugebende Formularvorlagen werden gescannt und der Bediener zeigt mit einem Cursor auf Eingabefelder. Die Position und Größe der Eingabefelder wird gespeichert. Der Bediener kann auch den jedem Datenfeld zugeordneten Datentyp bestimmen. Beim automatischen Lesen von Formularen werden diese eingescannt und anhand der in den gespeicherten Formularvorlagen enthaltenen Datenfeldern automatisch ausgelesen. Falls beim Auslesen ein Fehler auftritt, kann der Bediener über die Tastatur den Fehler korrigieren.

Die US 6,028,970 betrifft ein Verfahren und ein System zur automatischen Texterkennung (OCR). Das System umfasst ein Fehlerkorrigiermodul ("error correction logic module"). Dieses Fehlerkorrigiermodul wird auf klar erkennbare Datenfehler angewandt, um diese zu korrigieren. Diese Korrekturen werden automatisch ausgeführt. Hierbei werden nicht nur Fehler einzelner Buchstaben erkannt, sondern auch Fehler im Kontext analysiert und entsprechend korrigiert. Ein nicht automatisch korrigierbarer Fehler kann dem Bediener mittels einer Fehlernachricht mitgeteilt werden. Der Bediener kann dann den mittels der Texterkennung erzeugten Text beurteilen und gegebenenfalls korrigieren.

Der Erfindung liegt die Aufgabe zugrunde, ein Verfahren und ein System zum Erfassen von Daten aus maschinell lesbaren Dokumenten zu schaffen, bei dem die Eingabe der Daten gegenüber dem bekannten Verfahren erheblich vereinfacht wird, falls Daten nicht automatisch extrahiert werden konnten.

Die Aufgabe wird durch ein Verfahren mit den Merkmalen des Anspruchs 1 und durch ein System mit dem Merkmal des Anspruchs 16 gelöst. Vorteilhafte Ausgestaltungen der Erfindung sind in den jeweiligen Unteransprüchen angegeben.

Mit den oben erläuterten Verfahren können Daten aus mehreren maschinell lesbaren Dokumenten erfasst werden, wobei die Daten einer Datenbank zugeordnet werden, indem einzelne Daten möglichst automatisch dem Dokument extrahiert werden und in entsprechende Datenbankfelder eingetragen werden. Falls Daten für ein oder mehrere bestimmte Datenbankfelder einem Dokument nicht mit der notwendigen Zuverlässigkeit extrahiert werden konnten, zum Beispiel weil ein Fehler festgestellt worden ist, der beispielsweise dadurch verursacht sein kann, dass in dem Dokument an der Stelle, wo die Daten gelesen werden sollten, keine Daten oder falsche Daten vorhanden sind, oder dass beim Einlesen dieses Dokumentes mittels eines OCR-Verfahrens ein oder mehrere Zeichen falsch umgesetzt werden, so werden erfindungsgemäß folgende Schritte ausgeführt:
- Darstellen des Dokumentes an einem Bildschirm,
- Anzeigen des Datenbankfeldes, für das die Daten nicht mit der notwendigen Zuverlässigkeit extrahiert werden konnten, am Bildschirm
- Ausführen einer Vorschlags-Routine, mit welcher Stringabschnitte in der Nähe eines von einem Benutzer auf dem Bildschirm bewegbaren Zeiger ausgewählt, markiert und zur Extraktion vorgeschlagen werden.

Das Dokument wird am Bildschirm dargestellt, damit der Benutzer es lesen kann. Zudem wird das Datenbankfeld angezeigt, für das die Daten nicht mit der notwendigen Zuverlässigkeit extrahiert werden konnten. Hierdurch wird der Benutzer in Kenntnis darüber gesetzt, für welches Datenbankfeld die Daten aus dem am Bildschirm dargestellten Dokument noch zu extrahieren sind.

Durch das Ausführen bzw. Aktivieren der Vorschlags-Routine werden Stringabschnitte in der Nähe eines von dem Benutzer auf dem Bildschirm bewegbaren Zeiger ausgewählt, markiert und zur Extraktion vorgeschlagen. Hierdurch muss der Benutzer lediglich den Zeiger auf dem am Bildschirm dargestellten Dokument in die Nähe eines Stringabschnittes bewegen, der die Daten für das angezeigte Datenbankfeld enthält. Die Daten werden dann automatisch ausgewählt, markiert und zur Extraktion vorgeschlagen. Der Benutzer kann dann lediglich durch Betätigen einer bestimmten Taste den vorgeschlagenen Stringabschnitt in das Datenbankfeld übernehmen.

Durch das automatische Auswählen und Markieren des Stringabschnittes wird der Vorgang der Übernahme der noch fehlenden Daten erheblich vereinfacht und beschleunigt.

Nach einer bevorzugten Ausführungsform der Erfindung werden beim Auswählen des Stringabschnittes Konzept-Informationen berücksichtigt, die dem jeweiligen Datenbankfeld zugeordnet sind.

Die Erfindung wird nachfolgend beispielhaft anhand der Zeichnung näher erläutert. In der Zeichnung zeigen:
- Figur 1: ein Verfahren zum Erfassen von Daten aus einem Dokument, die nicht automatisch extrahiert werden konnten,
- Figur 2 - 6: jeweils Kopien von Bildschirmdarstellungen zu einzelnen Verfahrensschritten des in Figur 1 gezeigten Verfahrens,
- Figur 7: ein Verfahren zum Extrahieren von in Tabellen angeordneten Daten,
- Figur 8, 9: jeweils eine Tabelle mit markierten Daten, und
- Figur 10: ein System zum Ausführen des erfindungsgemäßen Verfahrens.

Das erfindungsgemäße Verfahren zum Erfassen von Daten aus maschinell lesbaren Dokumenten ist eine Weiterbildung der eingangs erläuterten Verfahren, mit welchen aus Dokumenten maschinell Daten extrahiert und in einer Datenbank gespeichert werden können.

Bei diesen Verfahren können jedoch nicht immer alle Datenbankfelder der Datenbank zuverlässig mit aus den Dokumenten extrahierten Daten gefüllt werden. Liegt zum Beispiel beim Extrahieren der Daten ein Fehler vor, so wird das automatische Verfahren unterbrochen und unter Mitwirkung eines Benutzers werden die Daten aus dem Dokument manuell in Datenbankfelder übertragen. Ein solcher Fehler kann dadurch verursacht sein, dass in dem zu bearbeitenden Dokument kein geeigneter Stringabschnitt gefunden wird, aus dem die Daten gelesen werden können oder der Stringabschnitt fehlerhafte Daten enthält, die beispielsweise beim Umsetzen in codierten Text des Dokumentes mittels eines OCR-Verfahrens entstanden sind.

Das erfindungsgemäße Verfahren beginnt somit dann, wenn Daten nicht zuverlässig extrahiert werden können. Der Ausdruck "nicht zuverlässig extrahierbar" umfasst sowohl grundsätzliche Fehler beim Lesen von Daten, die ein Lesen der Daten nicht möglich machen als auch gelesene Daten, die zum Beispiel unter Berücksichtigung von Kontext-Informationen auf das Datenbankfeld abgebildet werden, wobei die Güte der Abbildung ermittelt wird. Derartige Abbildungsverfahren sind zum Beispiel das eingangs erläuterte String Matching-Verfahren. Ist die hierbei erzielte Abbildungsgüte zu gering, so werden die automatisch eingelesenen Daten als nicht ausreichend zuverlässig bewertet und verworfen.

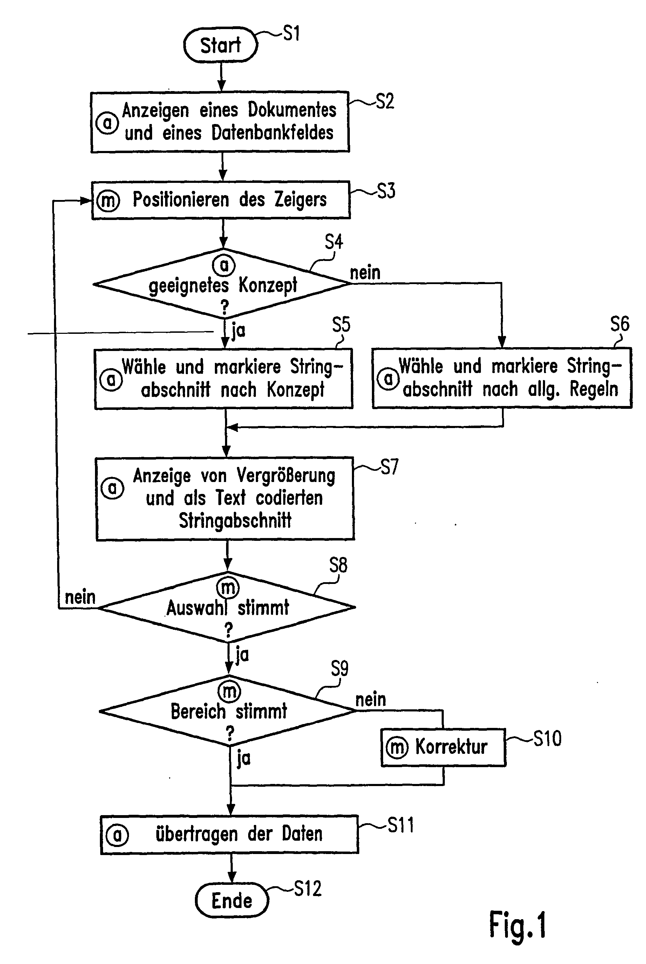

Nachfolgend wird das erfindungsgemäße Verfahren anhand des in Figur 1 dargestellten Flussdiagramms erläutert. In dem Flussdiagramm sind alle Schritte, die automatisch ausgeführt werden, mit einem "a" im Kreis und alle vom Benutzer manuell zu tätigenden Schritte mit einem "m" im Kreis gekennzeichnet.

Es beginnt mit dem Schritt S1.

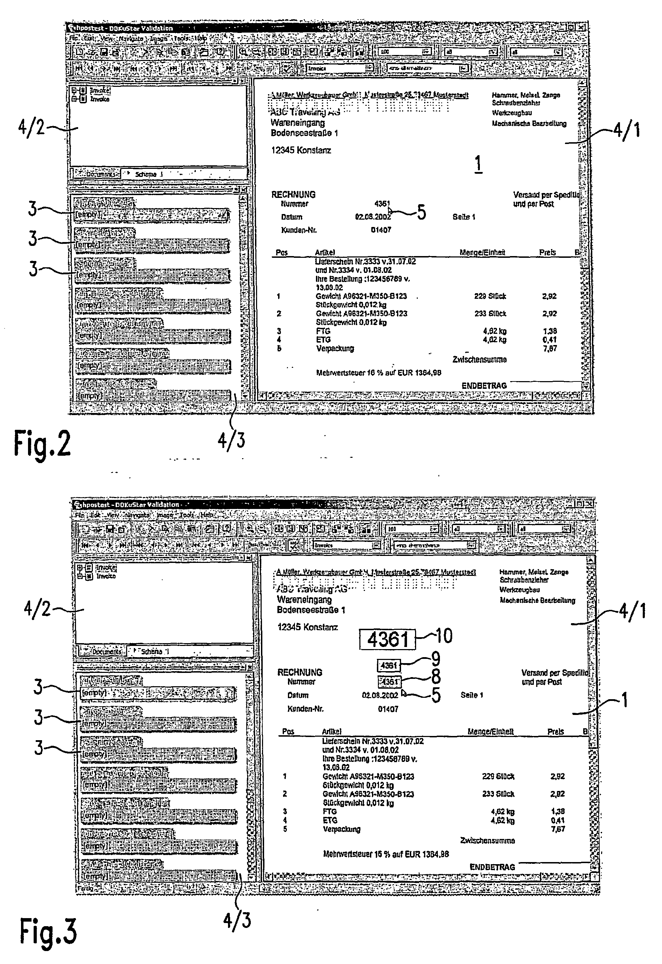

Nachdem zumindest Daten für ein Datenbankfeld nicht mit der notwendigen Zuverlässigkeit extrahiert werden konnten, wird das entsprechende Dokument 1 an einem Bildschirm 2 dargestellt und das Datenbankfeld 3 angezeigt (Schritt S2). Figur 2 zeigt eine Bildschirmdarstellung unmittelbar nach dem Feststellen, dass Daten nicht mit der notwendigen Zuverlässigkeit extrahiert werden konnten, wobei in einem Fenster 4/1 auf der rechten Seite der Bildschirmdarstellung das Dokument 1 dargestellt ist. Auf der linken Seite sind zwei Fenster 4/2 und 4/3 angeordnet. Das Fenster 4/2 enthält eine Übersicht der zu bearbeitenden Dokumente und im Fenster 4/3 sind die einzelnen Datenbankfelder angegeben, in welche Daten gespeichert werden, die aus dem Dokument 1 zu lesen sind.

In dem dargestellten Beispiel konnte keines der Datenbankfelder mit Daten gefüllt werden, weshalb die einzelnen Datenbankfelder 3 mit dem Zusatz [empty] versehen sind. Es ist jedoch auch möglich, dass nur in wenigen Datenbankfeldern oder lediglich in einem einzigen Datenbankfeld Daten fehlen.

In Figur 2 ist das Datenbankfeld "InvoiceNumber" (= Rechnungsnummer) im Vergleich zu den anderen Datenbankfeldern 3 dunkler markiert, was dem Benutzer anzeigt, dass für dieses Datenbankfeld 3 Daten aus dem Dokument 1 zu extrahieren sind. Zusätzlich ist im oberen Bereich des Fensters 4/1 in großer Schrift der Begriff "InvoiceNumber" aufgeführt, das dem Benutzer zusätzlich anzeigt, für welches Datenbankfeld Daten zu extrahieren sind.

Der Benutzer kann nun im Fenster 4/1 einen Zeiger 5 positionieren, den er vorzugsweise derart anordnet, dass er sich möglichst nahe an dem Stringabschnitt befindet, von dem der Benutzer annimmt, dass dessen Inhalt in dem entsprechenden Datenbankfeld abzuspeichern ist. In dem in Figur 2 gezeigten Beispiel sind Daten für das Datenbankfeld "Rechnungsnummer" zu extrahieren, weshalb der Zeiger 5 in der Nähe der Rechnungsnummer "4361" positioniert wird (Schritt S3).

Der Zeiger 5 kann hierbei mittels einer Maus 6 oder durch Eingabe an einer Tastatur 7 im Fenster 4/1 bewegt werden.

Nach dem Positionieren des Zeigers 5 beginnt eine Vorschlags-Routine, die mehrere Verfahrensschritte umfasst. Diese Vorschlags-Routine kann einerseits dadurch ausgelöst werden, dass der Zeiger 5 ein vorbestimmtes Zeitintervall nicht bewegt wird, wodurch dann die Vorschlags-Routine automatisch ausgeführt wird, oder dadurch, dass eine bestimmte Taste einer Maus oder der Tastatur bestätigt wird.

Im Schritt S4 wird zunächst geprüft, ob in der näheren Umgebung des Zeigers ein Stringabschnitt mit einem für das Datenbankfeld 3 geeigneten Konzept vorhanden ist, sofern dem entsprechenden Typ des Datenbankfeldes vorab Konzeptinformationen zugeordnet wurden. Diese Konzeptinformationen umfassen die Syntax und/oder die Semantik des Datenbankfeldes. Informationen zur Syntax sind zum Beispiel die Anzahl von Ziffern und/oder Buchstaben und/oder vorbestimmte Formate des zu lesenden Stringabschnittes. So weisen Datumsfelder, Betragsfelder und Adressfelder in der Regel bestimmte Formate auf. Informationen zur Semantik umfassen vorbestimmte Begriffe, die in das entsprechende Datenbankfeld eingefügt werden können. Dies ist zum Beispiel bei Währungsangaben zweckmäßig, oder wenn die Artikelbezeichnung eines bestimmten Lieferanten eingelesen werden sollen, der eine begrenzte Anzahl von Artikeln liefern kann. Die entsprechenden Artikelbezeichnungen sind dann in einem Lexikon abgelegt und können dann eindeutig erkannt werden.

Bei dem in Figur 2 dargestellten Ausführungsbeispiel befinden sich in der Nähe des Zeigers 5 die zwei Stringabschnitte "4361" und "02.08.2002". Der letzte Stringabschnitt besitzt die Syntax eines Datums, weshalb er zum Extrahieren der Rechnungsnummer verworfen wird. Der Stringabschnitt "4361" entspricht der Syntax einer Rechnungsnummer. Somit wird im Schritt S4 entschieden, dass ein Stringabschnitt mit einem geeigneten Konzept vorliegt, weshalb der Verfahrensablauf auf den Schritt S5 übergeht. Im Schritt S5 wird der Stringabschnitt "4361" markiert (Figur 3). Die Markierung erfolgt im vorliegenden Ausführungsbeispiel durch eine farbliche Unterlegung des Stringabschnittes und durch Zeichnen eines Rahmens 8.

Sollte im Schritt S4 kein geeignetes Konzept ermittelt werden, so geht der Verfahrensablauf auf den Schritt S6 über. Im Schritt S6 wird das zum Zeiger 5 nächstliegend angeordnete Einzelzeichen ermittelt, das im vorliegenden Ausführungsbeispiel gemäß Fig. 2 - 4 die "1" ist. Danach werden die Grenzen des dieses Zeichen enthaltenden Stringabschnittes nach allgemeinen Regeln ermittelt. Diese Grenzen können zum Beispiel durch Leerzeichen bzw. Leerräume im Dokument 1 oder durch bestimmte Satzzeichen oder sonstige Markierungen im Dokument 1 vorgegeben sein. Werden entsprechende Begrenzungsmarkierungen erkannt, so wird der dazwischen liegende Stringabschnitt ausgewählt und markiert. Bei dem in Figur 2 und 3 gezeigten Ausführungsbeispiel befinden sich seitlich des Stringabschnittes "4361" jeweils Leerräume, durch die auch nach den allgemeinen Regeln eine eindeutige Auswahl der Markierung des Stringabschnittes möglich ist.

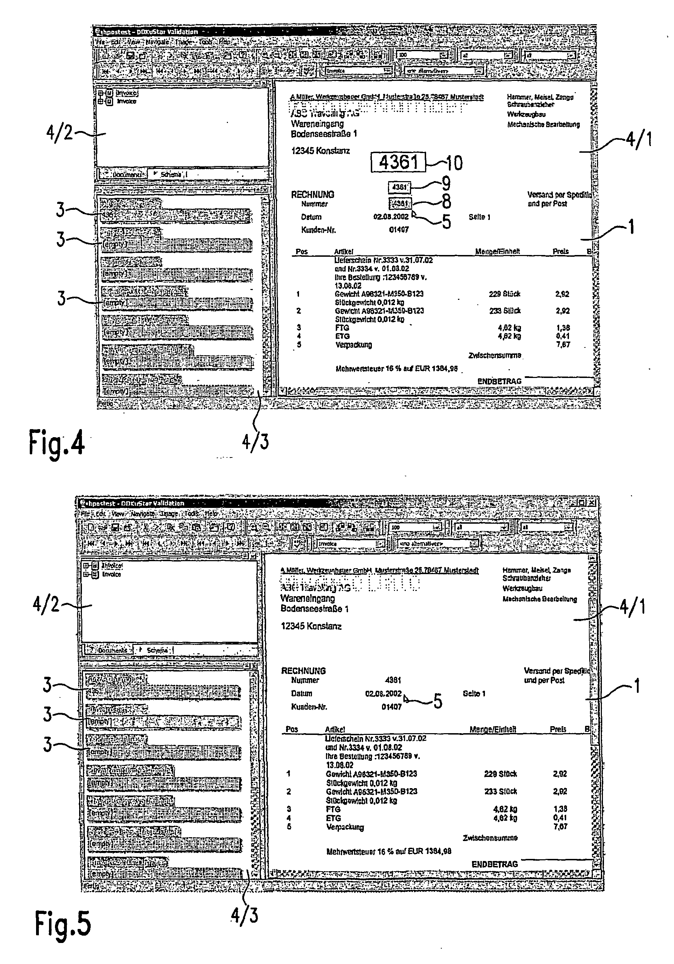

Unabhängig davon, ob der Stringabschnitt gemäß dem Schritt S5 oder gemäß dem Schritt S6 ausgewählt oder markiert worden ist, geht der Verfahrensablauf auf den Verfahrensschritt S7 über, mit der der Stringabschnitt in einem zusätzlichen Rahmen 9 als codierter Text und in einem weiteren Rahmen 10 vergrößert dargestellt wird (Fig. 3, 4). Bei dem vorliegenden Ausführungsbeispiel liegt das Dokument 1 als grafische Datei, zum Beispiel im pdf, tif, gif, jpg-Format vor. Üblicherweise wird in dem bereits vorausgegangenen Verfahrensabschnitt das Dokument einer OCR-Routine unterzogen und in codierten Text umgesetzt. Der codierte Text ist hierbei auch auf Konzepte untersucht worden und die entsprechenden Informationen sind abgespeichert worden. Diesem codierten Text wird der zu dem Stringabschnitt korrespondierende Abschnitt entnommen und in dem Rahmen 9 dargestellt. Hierdurch erkennt der Benutzer, ob der Stringabschnitt korrekt in codierten Text umgesetzt worden ist.

Im Rahmen 10 wird der Stringabschnitt im Grafikformat in vergrößerter Darstellung dargestellt, wodurch der Benutzer auch Details im Stringabschnitt erkennen kann.

Mit dem Schritt S7 ist die Vorschlags-Routine abgeschlossen.

Im Schritt S8 beurteilt der Benutzer, ob der ausgewählte und markierte Stringabschnitt grundsätzlich zur Übernahme in das Datenbankfeld geeignet ist. Ist dies nicht der Fall, so wird der Zeiger 5 erneut positioniert (S3) und die Vorschlags-Routine (S4 - S7) wiederholt ausgeführt. Ist die Auswahl des Stringabschnitts hingegen grundsätzlich geeignet, so beurteilt der Benutzer, ob auch der markierte Bereich korrekt ist (Schritt S9). Ist dies nicht der Fall, so kann der Benutzer die Markierung des Stringabschnittes manuell bearbeiten und/oder den codierten Text im Rahmen 9 editieren (Schritt S10). Mit dem Editieren des codierten Textes können Fehler, die durch eine nicht korrekte OCR-Umsetzung entstanden sind, behoben werden. Bei diesen Korrekturen (Bereich anpassen, Editieren) werden automatisch der markierte Bereich und die Inhalte der Rahmen 9 und 10 angepasst.

Ist der markierte Bereich korrekt bzw. vom Benutzer entsprechend überarbeitet worden, so geht der Verfahrensablauf auf den Schritt S11 über, mit dem die in dem ausgewählten Stringabschnitt enthaltenen Daten in das korrespondierende Datenbankfeld übertragen werden (Figur 4). Diese Übertragung der Daten wird durch eine Betätigung einer vorbestimmten Taste an der Maus oder der Tastatur vom Benutzer ausgelöst. Danach ist das Verfahren zum Extrahieren von Daten für ein Datenbankfeld beendet (S12). Sind Daten für weitere Datenbankfelder zu lesen, so beginnt das Verfahren erneut mit dem Schritt S1. In Figur 5 ist das nächste zu lesende Datenbankfeld "Invoice Date" (= Rechnungsdatum) angezeigt.

Mit dem erfindungsgemäßen Verfahren wird die Tätigkeit eines Benutzers beim manuellen Übertragen von Daten aus einem Dokument in ein Datenbankfeld lediglich auf das Positionieren des Zeigers, der Kontrolle der automatisch vorgeschlagenen Auswahl und der eventuellen Korrektur des Bereiches und das Betätigen einer Taste zum Übertragen der Daten beschränkt. Die Auswahl und die Markierung des Bereichs des auszuwählenden Stringabschnittes wird vom erfindungsgemäßen Verfahren selbsttätig ausgeführt.

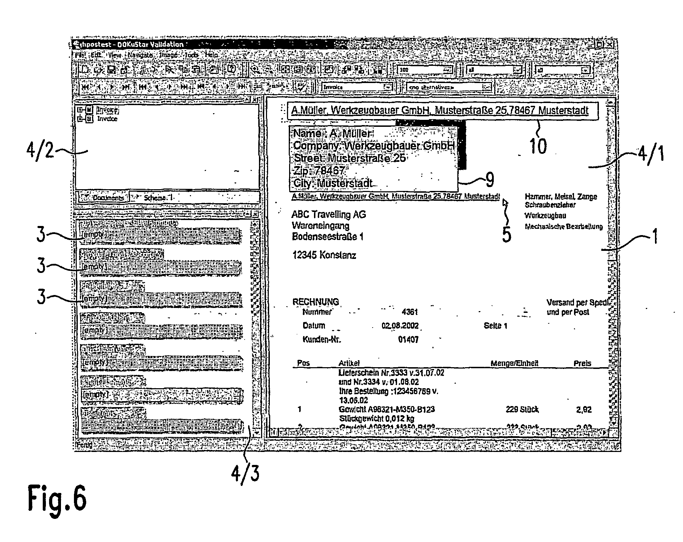

Die Figuren 2 bis 5 zeigen die Übernahme von Daten in ein einzelnes Datenbankfeld. Durch die Berücksichtigung von Konzept-Informationen ist es jedoch auch möglich, mit einem einzigen Stringabschnitt Daten für mehrere Datenbankfelder zu extrahieren. Figur 6 zeigt ein entsprechendes Ausführungsbeispiel, in dem die vollständige Adresse als ein Stringabschnitt markiert und gelesen wird, wobei die Adresse selbsttätig in die einzelnen Datenbankfelder, Name, Firma, Straße, Postleitzahl und Stadt segmentiert wird.

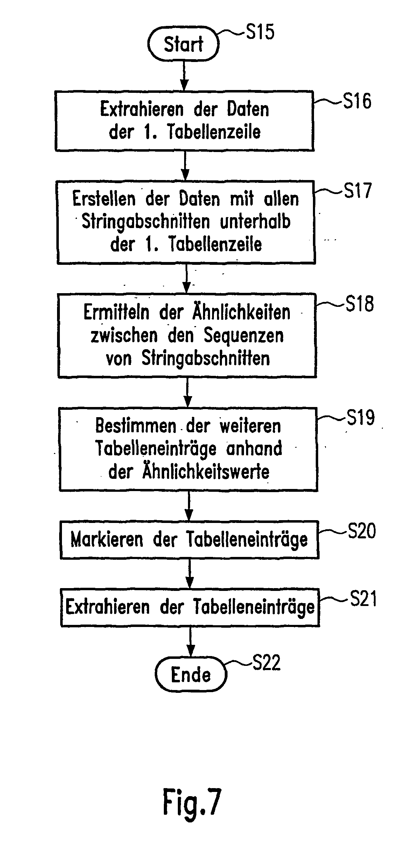

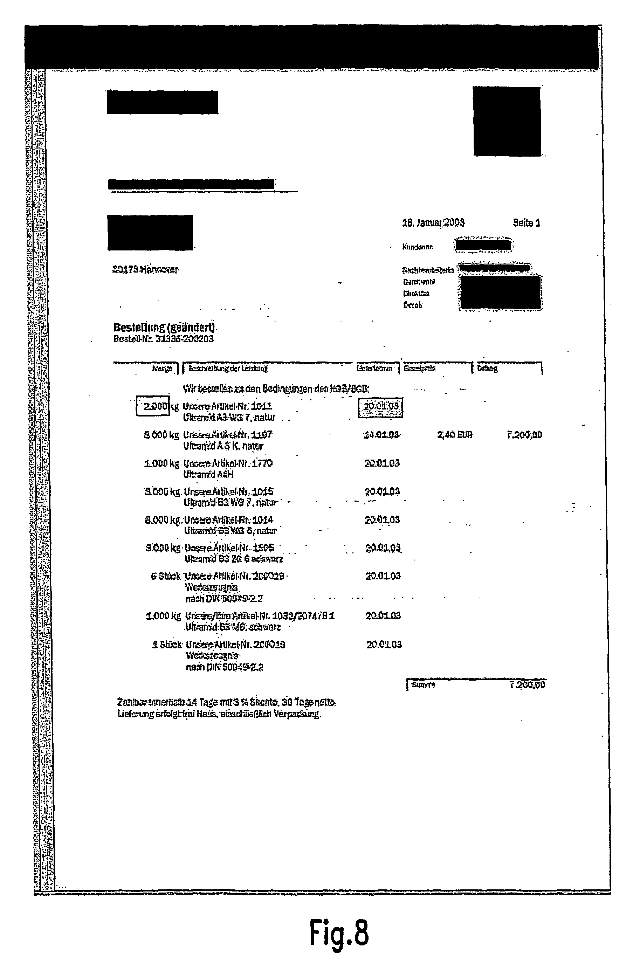

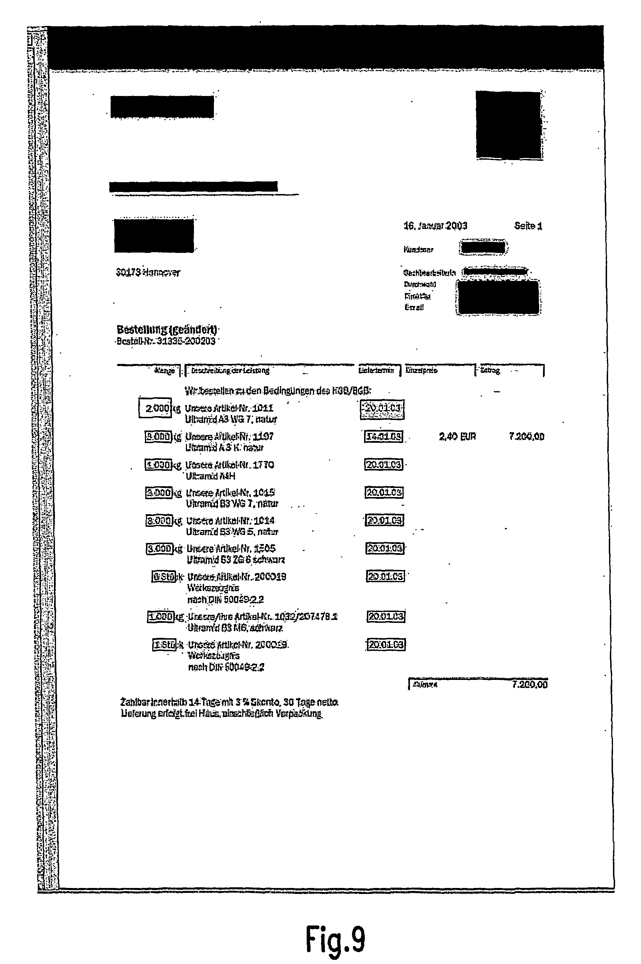

Nachfolgend wird eine weitere Ausgestaltung des oben beschriebenen Verfahrens anhand des Flussdiagramms aus Figur 7 und der Bildschirmdarstellungen gemäß Figur 8 und 9 erläutert, mit dem Daten aus Tabellen extrahiert werden können.

Dieses Verfahren beginnt mit dem Schritt S15.

Im Schritt S16 werden die Werte der Tabelle in der ersten Tabellenzeile gemäß obigen Verfahren durch Positionieren des Zeigers, automatisches Auswählen und Markieren des Stringabschnittes und Übernehmen der Daten in korrespondierende Datenbankfelder extrahiert. Figur 8 zeigt eine Tabelle, in der die Stringabschnitte der ersten Tabellenzeile markiert sind, die in die entsprechenden Datenbankfelder übernommen worden sind. Diese Datenbankfelder besitzen die Struktur einer Tabelle, zum Beispiel sind sie als zwei-dimensionales Datenfeld angelegt, so dass beim Extrahieren der Daten in diese Datenbankfelder das Verfahren anhand des Datenbankfeldes selbsttätig erkennt, dass Daten aus einer Tabelle ausgelesen werden.

Eine Tabellenzeile kann sich auch über mehrere Seiten erstrecken, wenn die Tabelle sich entsprechend über mehrere Seiten erstreckt. Sind die Daten der ersten Tabellenzeile vollständig extrahiert worden, kann der Benutzer durch eine vorbestimmte Eingabe das automatische Extrahieren der weiteren Tabelleneinträge initiieren. Wird diese Eingabe vom Benutzer getätigt, so werden im Schritt S17 zunächst eine Liste mit allen Stringabschnitten erstellt, die unterhalb der ersten Tabellenzeile angeordnet sind.

In Schritt S18 wird mittels einer Kostenfunktion ein Kostenwert zwischen Sequenzen von Stringabschnitten der Liste und der Sequenz der Stringabschnitte der ersten Tabellenzeile, auf deren Grundlage Daten in die Datenbankfelder im Schritt S16 extrahiert worden sind, ermittelt. Bei dieser Kostenfunktion werden den Sequenzen der Stringabschnitte der Liste geringe Kosten zugewiesen, deren Stringabschnitte bezüglich ihrer horizontalen Position und ihrer Breite mit den korrespondierenden Stringabschnitten der ersten Tabellenzeile übereinstimmen oder zumindest sehr ähnlich sind. Dieser Kostenwert ist somit indirekt proportional zur Ähnlichkeit zwischen den in der Liste aufgeführten Sequenzen von Stringabschnitten und den in der ersten Tabellenzeile enthaltenen Sequenz von Stringabschnitten.

Die hierbei verwendete Kostenfunktion entspricht der aus dem Kapitel 8.6.1 String Matching Allowing Errors in Modern Information Retrieval (ISBN 0-201-39829-X) beschriebenen Kostenfunktion, mit welcher jeweils ein Einzelkostenwert zwischen einem Stringabschnitt der ersten Tabellenzeile und einem Stringabschnitt der weiteren Tabellenzeilen ermittelt wird. Da jede Sequenz mehrere Stringabschnitte umfasst, wird mittels des Viterbi-Algorithmus für die einzelnen Sequenzen von Stringabschnitten jeweils ein Gesamtkostenwert bzw. Gesamtähnlichkeitswert durch Summieren der Einzelkostenwerte berechnet.

Anhand dieser Kostenwerte bzw. Ähnlichkeitswerte werden die Sequenzen von Stringabschnitten als Tabellenzeilen bestimmt, deren Ähnlichkeitswert unter einem vorbestimmten Schwellwert liegt (S19). Hierdurch sind alle Tabellenzeilen und damit Tabelleneinträge der Tabelle bestimmt. Sie werden im Schritt S20 markiert (Figur 9) und im Schritt S21 extrahiert, d.h., automatisch ausgelesen, gegebenenfalls in codierten Text umgesetzt, und in den entsprechenden Datenbankfeldern gespeichert.

Mit dem Schritt S22 ist dieses Verfahren beendet.

Zweckmäßigerweise ist es möglich, die Tabelleneinträge nachzubearbeiten, d.h., die markierten Bereiche zu verändern (verschieben, vergrößern, verkleinern) bzw. einzelne Zeilen zu entfernen bzw. hinzuzufügen. Bei einer Nachbearbeitung werden die Einträge in den Datenbankfeldern automatisch entsprechend angepasst.

Zusätzlich kann beim Auslesen der Daten und Eintragen in die Datenbankfelder eine zusätzliche Kontrolle durch eine Abbildung mittels dem String Matching-Verfahren erfolgen, mit welcher bestimmt wird, wie gut die Einträge mit dem durch die einzelnen Datenbankfelder vorgegebenen Konzept übereinstimmen.

Weiterhin kann das erfindungsgemäße Verfahren mit dem in der deutschen Patentanmeldung DE 103 42 594.2 beschriebenen Verfahren zum Erfassen von Daten aus mehreren maschinell lesbaren Dokumenten kombiniert werden, weshalb auf die Patentanmeldung vollinhaltlich Bezug genommen wird und sie durch Bezugnahme in die vorliegende Patentanmeldung inkorporiert wird.

Bei diesem Verfahren zum automatischen Erfassen von Daten aus mehreren maschinell lesbaren Dokumenten werden Vorlagedokumente mit einem Lesedokument verglichen und deren Ähnlichkeit bewertet. Das hierbei angewandte Verfahren kann auch zum Auslesen einer Tabelle angewendet werden, wobei die Sequenz der ausgewählten Stringabschnitte der ersten Tabellenzeile dem Vorlagedokument entsprechen und die Kombinationen von Stringabschnitten der weiteren Tabellenzeilen den Lesedokumenten entsprechen.

Bei dem oben beschriebenen erfindungsgemäßen Verfahren zum Extrahieren von Daten aus Tabellen muss ein Benutzer lediglich den Zeiger zu den Tabelleneinträgen in der ersten Tabellenzeile bewegen und die Übernahme der dann automatisch ausgewählten und markierten Stringabschnitte als Daten für das entsprechende Datenbankfeld bestätigen. Nachdem er dies für alle Tabelleneinträge der ersten Tabellenzeile ausgeführt hat, muss er lediglich durch eine Eingabe das vollständige Auslesen der weiteren Tabelleneinträge initiieren. Das Verfahren ermittelt dann selbstständig die weiteren Tabelleneinträge, markiert sie und extrahiert die Daten in die Datenbank.

Dies beschleunigt erheblich das Auslesen von Daten aus der Tabelle in eine Datenbank. Der Verfahrensabschnitt S17 bis S21 stellt daher eine eigenständige Erfindung dar, die jedoch bevorzugt in Kombination mit dem in Figur 1 dargestellten Verfahren, auf der sich der Schritt S16 bezieht, verwendet wird.

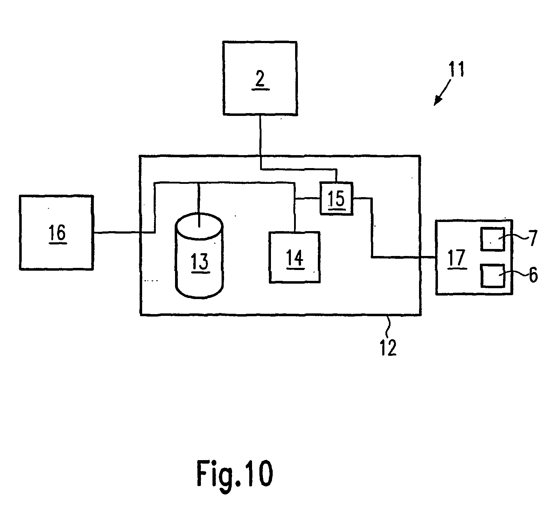

Figur 10 zeigt schematisch ein System zum Ausführen des erfindungsgemäßen Verfahrens. Dieses System 11 weist einen Computer 12 mit einer Speichereinrichtung 13, mit einer zentralen Prozessoreinrichtung (CPU) 14 und eine interface-Einrichtung 15 auf. Am Computer 12 sind ein Scanner 16, ein Bildschirm 2 und eine Eingabeeinrichtung 17 angeschlossen. Die Eingabeeinrichtung 17 umfasst eine Tastatur 7 und/oder eine Maus 6.

In der Speichereinrichtung 13 ist ein Softwareprodukt zum Ausführen des erfindungsgemäßen Verfahrens gespeichert, das an der CPU 14 ausgeführt wird. Mit dem Scanner 16 werden Dokumente erfasst und in eine elektronische Datei umgewandelt. Diese elektronischen Dateien werden vom Computer 12 eingelesen und eventuell mittels einer OCR-Routine und/oder eines Verfahrens zum Erkennen spezieller Syntax oder Semantik in der Datei vorverarbeitet. Danach werden die in den Dateien enthaltenen Dokumente entsprechen dem oben beschriebenen Verfahren mit dem System 11 bearbeitet. An der Eingabeeinrichtung 17 können die entsprechenden Eingaben vorgenommen werden, wobei diese sich lediglich auf Bewegen des Zeigers 5 und ein paar wenige Tastatureingaben beschränken. Gegebenenfalls werden die markierten Felder mittels Tastatur oder Mauseingabe verschoben oder durch Vergrößerung bzw. Verkleinerung angepasst oder der codierte Text editiert.

Die Erfindung ist oben anhand eines Ausführungsbeispiels erläutert worden. Im Rahmen der Erfindung sind hiervon Abwandlungen möglich. So kann zum Beispiel anstelle des Rahmens 8 lediglich der Rahmen 10 vorgesehen werden, in dem der ausgewählte Stringabschnitt vergrößert dargestellt wird. Dieser Rahmen 10 stellt auch eine Markierung des Stringabschnittes dar.

Bei dem oben erläuterten Ausführungsbeispiel werden die Dokumente eingescannt und liegen dann in einem Graphikformat vor. Das erfindungsgemäße Verfahren kann jedoch auch zum Lesen von Informationen aus Dokumenten angewandt werden, die bereits in codiertem Text vorliegen, wie zum Bespiel E-Mails. Bei einer solchen Anwendung ist es selbstverständlich nicht notwendig, dass die Dokumente mittels einer OCR-Routine in codierten Text umgesetzt werden.

Die Erfindung kann folgendermaßen kurz zusammengefasst werden:

Die Erfindung betrifft ein Verfahren zum Erfassen von Daten aus maschinell lesbaren Dokumenten, wobei die Daten einer Datenbank zugeordnet werden.

Mit der Erfindung werden Stringabschnitte, die sich in der Nähe eines vom Benutzer bewegbaren Zeigers befinden, automatisch ausgewählt, markiert und deren Inhalt zur Übernahme in eine Datenbank vorgeschlagen.

Nach einer Weiterbildung des erfindungsgemäßen Verfahrens kann der Inhalt einer Tabelle vollautomatisch ausgelesen werden, wenn die Tabelleneinträge in einer ersten Tabellenzeile einmal gemäß obigen Verfahren ausgelesen worden sind.

Die Erfindung kann sowohl mittels elektronischen Komponenten (Hardware) als auch durch Computerprogrammelemente (Software oder Softwaremodule) realisiert werden. Die Erfindung wird dabei insbesondere aus einer Kombination von elektronischen Hardware-Elementen und Softwareelementen realisiert. Dementsprechend erfaßt die Erfindung auch Computerprogrammprodukte wie z.B. elektronische Datenträger (CD, DVD, Diskette, Bandlaufwerke) bzw. Komponenten, die über Computernetzwerke (Internet) verbreitet werden und/oder auf Computern und insbesondere im Zwischenspeichern geladen, bereit gehalten und/oder zum Ablauf gebracht werden.

### Bezugszeichenliste

- 1: Dokument
- 2: Bildschirm
- 3: Datenbankfeld
- 4: Fenster
- 5: Zeiger
- 6: Maus
- 7: Tastatur
- 8: Rahmen
- 9: Rahmen
- 10: Rahmen
- 11: System
- 12: Computer
- 13: Speichereinrichtung
- 14: CPU
- 15: Interface-Einrichtung
- 16: Scanner
- 17: Eingabeeinrichtung

## Patentansprüche

1. Verfahren zum Erfassen von Daten aus codierten Text enthaltenden Dokumenten, wobei die Daten einer Datenbank zugeordnet werden, indem einzelne Daten möglichst automatisch dem Dokument extrahiert werden und in entsprechende Datenbankfelder eingetragen werden, und falls Daten für ein oder mehrere bestimmte Datenbankfelder einem Dokument nicht mit der notwendigen Zuverlässigkeit extrahiert werden konnten, werden folgende Schritte ausgeführt:
- Darstellen des Dokumentes an einem Bildschirm,
- Anzeigen des Datenbankfeldes, für das die Daten nicht mit der notwendigen Zuverlässigkeit extrahiert werden konnten, am Bildschirm,
- Ausführen einer Vorschlags-Routine, mit welcher Stringabschnitte in der Nähe eines von einem Benutzer auf dem Bildschirm bewegbaren Zeiger ausgewählt, markiert und zur Extraktion vorgeschlagen werden, wobei der Stringabschnitt nach Maßgabe von dem Datenbankfeld zugeordneten Konzept-Informationen ausgewählt, markiert und zur Extraktion vorgeschlagen wird, wobei die Konzept-Informationen die Syntax und/oder die Semantik des Datenbankfeldes beschreiben, so dass von der Vorschlags-Routine ein zu markierender Stringabschnitt entsprechend der Syntax bzw. der Semantik des jeweiligen Datenbankfeldes ausgewählt und markiert wird.

2. Verfahren nach Anspruch 1,
**dadurch gekennzeichnet,**
**dass** die Informationen zur Syntax die Anzahl von Ziffern und/oder Buchstaben und/oder vorbestimmte Formate des zu lesenden Stringabschnitts beschreiben.

3. Verfahren nach Anspruch 1 oder 2,
**dadurch gekennzeichnet,**
**dass** die Informationen zur Semantik vorbestimmte Begriffe, bspw. mit einem Lexikon, beschreiben.

4. Verfahren nach einem der Ansprüche 1 bis 3,
**dadurch gekennzeichnet,**
**dass** ein Stringabschnitt ausgewählt wird, der zwischen zwei Begrenzungszeichen angeordnet ist.

5. Verfahren nach Anspruch 4,
**dadurch gekennzeichnet,**
**dass** Begrenzungszeichen Leerzeichen und/oder Satzzeichen umfassen.

6. Verfahren nach einem der Ansprüche 1 bis 5,
**dadurch gekennzeichnet,**
**dass** der Text von Dokumenten in grafischer Darstellung zunächst mit einem OCR-Verfahren in codierten Text umgesetzt wird und die Vorschlags-Routine zusätzlich zum markierten Stringabschnitt in grafischer Darstellung den codierten Text dieses Stringabschnittes darstellt.

7. Verfahren nach einem der Ansprüche 1 bis 5,
**dadurch gekennzeichnet,**
**dass** zusätzlich zum markierten Stringabschnitt dieser Stringabschnitt nochmals in vergrößerter Darstellung am Bildschirm angezeigt wird.

8. Verfahren nach einem der Ansprüche 1 bis 7,
**dadurch gekennzeichnet,**
**dass** die Vorschlags-Routine nach dem Markieren eines Stringabschnittes eine Funktion aktiviert, mit welcher durch Betätigen einer oder mehrerer vorbestimmter Tasten der Inhalt des markierten Stringabschnittes in die Datenbank übernommen wird.

9. Verfahren nach einem der Ansprüche 1 bis 8,
**dadurch gekennzeichnet,**
**dass** beim Ausführen der Vorschlags-Routine nach dem Bewegen des Zeigers ein vorbestimmtes Zeitintervall abgewartet wird, innerhalb dessen der Zeiger nicht bewegt werden darf, bevor ein Stringabschnitt ausgewählt wird.

10. Verfahren nach einem der Ansprüche 1 bis 9,
**dadurch gekennzeichnet,**
**dass** nach dem Einlesen von Daten aus einer ersten Tabellenzeile einer Tabelle in korrespondierende Datenbankfelder automatisch die weiteren Tabelleneinträge durch einen Vergleich von unterhalb der ersten Tabellenzeile angeordneten Stringabschnitten mit den Stringabschnitten der ersten Tabellenzeilen, die den eingelesenen Daten entsprechen, ermittelt werden und diese weiteren Tabelleneinträge automatisch extrahiert werden.

11. Verfahren nach Anspruch 10,
**dadurch gekennzeichnet,**
**dass** der Vergleich zwischen den Stringabschnitten mittels eines String Matching-Verfahrens erfolgt.

12. Verfahren nach Anspruch 10 oder 11,
**dadurch gekennzeichnet,**
**dass** die ermittelten Tabelleneinträge markiert werden.

13. Verfahren nach Anspruch 12,
**dadurch gekennzeichnet,**
**dass** Funktionen zum Editieren der markierten Tabelleneinträge bereitgestellt werden.

14. System zum Erfassen von Daten aus maschinell lesbaren Dokumenten umfassend einen Computer (12) mit einer Speichereinrichtung (13) und eine CPU (14), wobei in der Speichereinrichtung (13) ein Softwareprodukt zum Ausführen des Verfahrens nach einem der Ansprüche 1 bis 13 gespeichert ist.

15. System nach Anspruch 14,
**dadurch gekennzeichnet,**
**dass** das System eine Eingabeeinrichtung (17) in Form einer Maus (6) und/oder Tastatur (7) aufweist.

16. System nach Anspruch 14 oder 15,
**dadurch gekennzeichnet,**
**dass** das System einen Scanner (16) zum optischen Abtasten von Dokumenten aufweist.

17. Computerprogrammprodukt, das bei seinem Laden und Ausführen auf einem Computer (12) ein Verfahren nach einem der Ansprüche 1 bis 13 bewirkt.

## Claims

1. A method for acquiring data from documents including encoded text, the data being assigned to a database, by extracting individual data from the document as automatically as possible and entering them into corresponding database fields, and, if data cannot be extracted from a document with the required degree of reliability for one or more particular database fields, executing the following steps:
- displaying of the document on a display screen,
- indication on the display screen of the database field for which the data could not be extracted with the necessary degree of reliability,
- execution of a proposal routine with which string sections in the vicinity of a pointer on the display screen that can be moved by a user are selected, marked, and proposed for extraction,
the string section being selected, marked and proposed for extraction in accordance with concept information assigned to the database field,
the concept information describing the syntax and/or the semantics of the database field, so that the proposal routine selects and marks a string section that is to be marked in a manner corresponding to the syntax or to the semantics of the respective database field.

2. The method according to claim 1, **characterized in that** the information concerning syntax describes the number of numerals and/or letters and/or predetermined formats of the string section that is to be read.

3. The method according to claim 1 or 2, **characterized in that** the information concerning semantics describes specific terms, for example using a lexicon.

4. The method according to one of the claims 1 to 3, **characterized in that** a string section is selected that is situated between two delimiting characters.

5. The method according to claim 4, **characterized in that** the delimiting characters include empty characters and/or punctuation marks.

6. The method according to one of the claims 1 to 5, **characterized in that** the text of documents in graphic representation is first converted into coded text using an OCR method, and the proposal routine represents, in addition to the marked string section in graphic representation, the coded text of this string section.

7. The method according to one of the claims 1 to 5, **characterized in that** in addition to the marked string section, this string section is displayed again on the display screen in an enlarged representation.

8. The method according to one of the claims 1 to 7, **characterized in that** after the marking of a string section, the proposal routine activates a function with which the content of the marked string section is transferred into the data base through the actuation of one or more predetermined keys.

9. The method according to one of the claims 1 to 8, **characterized in that** during the execution of the proposal routine, after the movement of the pointer a predetermined time wait interval is observed, during which the pointer must not be moved, before a string section is selected.

10. The method according to one of the claims 1 to 9, **characterized in that** after data have been read from a first table row of a table into corresponding database fields, the further table entries are automatically determined through a comparison of string sections situated under the first table row with the string sections of the first table row, which correspond to the read-in data, and these additional table entries are automatically extracted.

11. The method according to claim 10, **characterized in that** the comparison between the string sections takes place using a string matching method.

12. The method according to claim 10 or 11, **characterized in that** the determined table entries are marked.

13. The method according to claim 12, **characterized in that** functions are provided for editing the marked table entries.

14. A system for acquiring data from machine-readable documents, comprising a computer (12) having a storage device (13) and a CPU (14), a software product for executing the method according to one of the claims 1 to 13 being stored in the storage device (13).

15. The system according to claim 14, **characterized in that** the system has an input device (17) in the form of a mouse (6) and/or keyboard (7).

16. The system according to claim 14 or 15, **characterized in that** the system has a scanner (16) for the optical scanning of documents.

17. A computer program product that, in its storing and execution on a computer (12), effects a method according to one of claims 1 to 13.

## Revendications

1. Procédé de détection de données dans des documents contenant du texte codé, les données étant associées à une base de données, en extrayant des données individuelles du document autant que possible de façon automatique et en les introduisant dans des champs appropriés de la base de données, et, dans le cas où des données destinées à un ou plusieurs champs de base de données n'ont pas pu être extraites du document avec la fiabilité nécessaire, on réalise les étapes suivantes consistant à :
- présenter le document sur un écran de présentation,
- afficher sur l'écran de présentation le champ de base de données concerné par les données qui n'ont pas pu être extraites avec la fiabilité nécessaire,
- exécuter un programme de proposition, à l'aide duquel des portions de chaîne de caractères, au voisinage d'un pointeur déplaçable par un utilisateur sur l'écran d'affichage, sont choisies, marquées et proposées à l'extraction, la portion de chaîne de caractères étant choisie, marquée et proposée à l'extraction en se conformant à des informations conceptuelles associées au champ de base de données, les informations conceptuelles décrivant la syntaxe et/ou la sémantique du champ de base de données de sorte qu'une portion de chaîne de caractères à marquer est choisie et marquée par le programme de proposition en se conformant à la syntaxe et à la sémantique du champ de base de données respectif.

2. Procédé selon la revendication 1, **caractérisé en ce que** les informations relatives à la syntaxe décrivent le nombre de chiffres et/ou de lettres et/ou de formats prédéterminés de la portion de chaîne de caractères à lire.

3. Procédé selon la revendication 1 ou 2, **caractérisé en ce que** les informations relatives à la sémantique décrivent des termes prédéterminés, en particulier à l'aide d'un lexique.

4. Procédé selon l'une des revendications 1 à 3, **caractérisé en ce qu'**une portion de chaîne de caractères est choisie, qui est disposée entre deux caractères de limitation.

5. Procédé selon la revendication 4, **caractérisé en ce que** les caractères de limitation comportent des caractères d'espacement et/ou des signes de ponctuation.

6. Procédé selon l'une des revendications 1 à 5, **caractérisé en ce que** le texte de documents représentés graphiquement est tout d'abord converti en texte codé par un procédé OCR, et le programme de proposition représente sous forme graphique le texte codé de cette portion de chaîne de caractères en plus de la portion de chaîne de caractères marquée.

7. Procédé selon l'une des revendications 1 à 5, **caractérisé en ce que**, en plus de la portion de chaîne de caractères marquée, cette portion de caractères est de surcroît affichée sous forme agrandie sur l'écran.

8. Procédé selon l'une des revendications 1 à 7, **caractérisé en ce que**, après avoir marqué une portion de chaîne de caractères, le programme de proposition active une fonction permettant de transférer dans la base de données le contenu de la portion de chaîne de caractères marquée en actionnant une ou plusieurs touches prédéterminées.

9. Procédé selon l'une des revendications 1 à 8, **caractérisé en ce que**, lors de l'exécution du programme de proposition après avoir déplacé le pointeur, on attend pendant un laps de temps prédéterminé pendant lequel le pointeur ne doit pas être déplacé avant d'avoir choisi une portion de chaîne de caractères.

10. Procédé selon l'une des revendications 1 à 9, **caractérisé en ce que**, après avoir lu des données sur une première ligne d'un tableau dans des champs de base de données correspondants, on détermine automatiquement les autres entrées du tableau en comparant des portions de chaîne de caractères disposées au-dessous de la première ligne du tableau aux portions de chaîne de caractères de la première ligne du tableau qui correspondent aux données lues, et ces autres entrées du tableau sont extraites automatiquement.

11. Procédé selon la revendication 10, **caractérisé en ce que** la comparaison des portions de chaîne de caractères entre elles est effectuée au moyen d'un procédé de correspondance de chaînes.

12. Procédé selon la revendication 10 ou 11, **caractérisé en ce que** les entrés déterminées du tableau sont marquées.

13. Procédé selon la revendication 12, **caractérisé en ce qu'**il est fourni des fonctions permettant d'éditer les entrées marquées du tableau.

14. Système de détection de données dans des documents lisibles automatiquement, ledit système comportant un ordinateur (12) doté d'un dispositif de mémorisation (13) et une CPU (14), un produit logiciel destiné à mettre en oeuvre le procédé selon l'une des revendications 1 à 13 étant mémorisé dans le dispositif de mémorisation (13).

15. Système selon la revendication 14, **caractérisé en ce que** le système comporte un dispositif d'entrée (17) se présentant sous la forme d'une souris (6) et/ou d'un clavier (7).

16. Système selon la revendication 14 ou 15, **caractérisé en ce que** le système comporte un scanner (16) destiné à analyser optiquement des documents.

17. Programme d'ordinateur destiné à mettre en oeuvre le procédé selon l'une des revendications 1 à 13 une fois qu'il a été chargé et exécuté dans un ordinateur (12).
